(19) Europäisches Patentamt
European Patent Office
Office européen des brevets

(11) EP 0 784 097 B1

(12) **EUROPÄISCHE PATENTSCHRIFT**

(45) Veröffentlichungstag und Bekanntmachung des Hinweises auf die Patenterteilung:
**18.10.2000 Patentblatt 2000/42**

(51) Int Cl.[7]: **C08G 18/00**, D06N 3/00, C14C 11/00

(21) Anmeldenummer: **96119696.1**

(22) Anmeldetag: **09.12.1996**

(54) **Dispersion nachvernetzbarer Beschichtungsmittel**

Dispersion of post-crosslinkable coating

Dispersion de revêtement ultérieurement réticulable

(84) Benannte Vertragsstaaten:
**AT BE CH DE ES FR GB IT LI NL SE**

(30) Priorität: **21.12.1995 DE 19548030**

(43) Veröffentlichungstag der Anmeldung:
**16.07.1997 Patentblatt 1997/29**

(73) Patentinhaber: **BAYER AG**
**51368 Leverkusen (DE)**

(72) Erfinder:
- **König, Eberhard, Dr.**
  **51375 Leverkusen (DE)**
- **Schütze, Detlef-Ingo, Dr.**
  **51061 Köln (DE)**
- **Pedain, Josef, Dr.**
  **51061 Köln (DE)**

(56) Entgegenhaltungen:
**EP-A- 0 193 808**
**EP-A- 0 208 908**
**EP-A- 0 595 149**
**DE-A- 3 231 062**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 784 097 B1

## Beschreibung

Die Erfindung betrifft die Verwendung wäßriger Dispersionen auf Basis (i) Ethergruppen und ionische Gruppen enthaltender blockierter Isocyanatpräpolymerisate und (ii) Polyamin für die Textil- und Lederbeschichtung.

Für Textil- und Lederbeschichtungen auf Polyurethanbasis gibt es im Prinzip zwei Alternativen. Seit geraumer Zeit benutzt man Zweikomponentensysteme bestehend aus NCO-Präpolymerisaten und Vernetzer und erreicht damit hervorragende Werte für die Haftung - allerdings liegen die marktüblichen PU-Zweikomponenten-Textil- und Lederbeschichtungsmittel als Lösungen in organischen Lösungsmitteln vor. Da die Verarbeiter immer mehr wäßrige Beschichtungsmittel verlangen, hat man natürlich auch wäßrige Textil- und Lederbeschichtungsmittel konzipiert (vgl. z.B. DE-OS 4 236 569) - dies sind allerdings Einkomponentensysteme, die nach dem Applizieren einfach auftrocknen. Eine chemische Bindung zum Substrat können diese Mittel nicht ausbilden.

Es bestand also ein Bedarf an Textil- und Lederbeschichtungsmitteln, welche die Vorteile beider Systeme in sich vereinigen, also auf organische Lösungsmittel weitgehend oder ganz verzichten können, bei Raumtemperatur lagerstabil sind und zu Beschichtungen mit hoher Haftung (vor allem: hoher Naßhaftung) und ausgezeichneter Wasserbeständigkeit führen.

Es wurde nun gefunden, daß Beschichtungsmittel der nachfolgend beschriebenen Zusammensetzung eine glückliche Kombination wünschenswerter Eigenschaften besitzen und sich daher für die Verwendung als Textil- und Lederbeschichtungsmittel hervorragend eignen.

Gegenstand der Erfindung ist also die Verwendung wäßriger Dispersionen enthaltend

A)

(i) Urethangruppen aufweisendes blockiertes NCO-Präpolymerisat mit

- einem als Zahlenmittel bestimmten Molekulargewicht von 2000 bis 10000, vorzugsweise 3500 bis 7000,
- einem Gehalt blockierter Isocyanatgruppen (berechnet als NCO) von 0,5 bis 5, vorzugsweise 1,0 bis 2,0 Gew.-%, bezogen auf das Präpolymerisat A)i),
- einem Gehalt an Ethoxygruppen $-CH_2CH_2O-$ von 2 bis 50, vorzugsweise 5 bis 25 Gew.-%, bezogen auf das Präpolymerisat A)i), mit einer sequenzlängen von 3 bis 50,
- einem Gehalt ionischer Gruppen von 5 bis 30, vorzugsweise 10 bis 20 meq (Milliäquivalenten) pro 100 g des Präpolymerisates A)i) (fest),

(ii) Polyamin mit (cyclo)aliphatisch gebundenen primären und/oder sekundären Aminogruppen,

wobei das Äquivalentverhältnis blockierter NCO-Gruppen aus (i) zu Aminogruppen aus (ii) 1:0,9 bis 1:1,2 beträgt, und

B) wäßrige Phase
zur Textil- und Lederbeschichtung.

Die blockierten NCO-Präpolymerisate A)i) können durch Umsetzung von

1) organischen Polyisocyanaten und

2) NCO-reaktiven Verbindungen hergestellt werden,

wobei diese Ausgangsverbindungen 1) und 2) nach Art und Menge so auszuwählen sind, daß die erhaltenen blockierten NCO-Präpolymerisate A)i) die Ethoxygruppen, die ionischen Gruppen und die blockierten Isocyanatgruppen in den anspruchsgemäßen Mengen enthalten. Dies bedeutet, daß die NCO-reaktiven Verbindungen 2)

a) solche mit (potentiell) ionischen Gruppen,

b) solche mit Ethoxygruppen und

c) wieder abspaltbare Blockierungsmittel enthalten.

Die Gruppen a) bis c) können auch untereinander überlappen, weil beispielsweise Sulfonatgruppen-haltige Polyethylenglykole sowohl ionische Gruppen als auch Ethoxygruppen mitbringen und somit die Eigenschaften der

Gruppen a) und b) in sich vereinigen und beispielsweise Alkalibisulfite sowohl ionische Gruppen mitbringen als auch blockierend wirken und somit die Eigenschaften der Gruppen a) und c) in sich vereinigen. Die nachfolgende Beschreibung der geeigneten Ausgangsmaterialien ist also vor diesem Hintergrund zu sehen.

Neben den Komponenten a) bis c) können die NCO-reaktiven Verbindungen 2) auch weitere, von a), b) und c) verschiedene, NCO-reaktive Verbindungen enthalten.

Bei den für die Ausgangskomponenten 1) und 2) angegebenen Molekulargewichten handelt es sich um die aus Endgruppengehalt und Funktionalität errechenbaren mittleren Molekulargewichte.

Als organische Polyisocyanate a) kommen aliphatische, cycloaliphatische, araliphatische, aromatische oder heterocyclische Polyisocyanate in Betracht, wie sie z.B. in "Methoden der Organischen Chemie" (Houben-Weyl), Bd. 14/2, Georg Thieme Verlag, Stuttgart 1963, Seiten 61 bis 70 und von W. Siefken in Liebigs Annalen der Chemie 562, Seiten 75 bis 136, beschrieben sind.

Bevorzugte Polyisocyanate 1) sind Verbindungen der Formel $Q(NCO)_n$ mit einem mittleren Molekulargewicht unter 800, worin n eine Zahl von 2 bis 4, Q einen aliphatischen $C_4$-$C_{12}$-Kohlenwasserstoffrest, einen cycloaliphatischen $C_6$-$C_{15}$-Kohlenwasserstoffrest, einen araliphatischen $C_7$-$C_{15}$-Kohlenwasserstoffrest oder einen heterocyclischen $C_2$-$C_{12}$-Rest mit 1 bis 3 Heteroatomen aus der Reihe Sauerstoff, Schwefel, Stickstoff bedeuten.

Beispiele derartiger bevorzugt einzusetzender Diisocyanate sind Tetramethylendiisocyanat, Hexamethylendiisocyanat (HDI), 2-Methyl-pentamethylendiisocyanat, 2,2,4-Trimethylhexamethylendiisocyanat (THDI), Dodecamethylendiisocyanat, 1,4-Diisocyanato-cyclohexan, 3-Isocyanatomethyl-3,3,5-trimethylcyclohexylisocyanat (Isophorondiisocyanat = IPDI), 4,4'-Diisocyanatodicyclohexylmethan (®Desmodur W), 4,4'-Diisocyanato-3,3'-dimethyl-dicyclohexylmethan, 4,4'-Diisocyanatodicyclohexylpropan-(2,2), 1,4-Diisocyanatobenzol, 2,4- oder 2,6-Diisocyanatotoluol bzw. Gemische dieser Isomeren, 4,4'-, 2,4'- oder 2,2'-Diisocyanatodiphenylmethan bzw. Gemische der Isomeren, 4,4'-Diisocyanatodiphenylpropan-(2,2), p-Xylylen-diisocyanat und $\alpha,\alpha,\alpha',\alpha'$-Tetramethyl-m- oder -p-xylylen-diisocyanat (TMXDI) sowie aus diesen Verbindungen bestehende Gemische. Besonders bevorzugt sind MDI und Desmodur W.

Es ist selbstverständlich auch möglich, die in der Polyurethan-Chemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate (mit)zuverwenden.

Ganz generell können als Einbaukomponenten 2a) für das Einbringen der ionischen Gruppen in die Polyurethane A) kationische und/oder anionische hydrophile difunktionelle Aufbaukomponenten verwendet werden, wie beispielsweise (potentiell) ionische Gruppen aufweisende Dihydroxylverbindungen, -diamine oder -diisocyanate. "Potentiell ionisch" werden die Produkte vor der Neutralisation der Säuregruppen bzw. vor der Protonierung der Aminogruppen genannt.

Ionische Gruppen für Präpolymerisate A) umfassen die Alkali- und Ammoniumcarboxylat- und -sulfonatgruppen sowie Ammoniumgruppen. Geeignete Einbaukomponenten 2a) für das Einbringen dieser Gruppen in die Präpolymerisate A)i) umfassen demzufolge z.B. Dihydroxycarbonsäuren, Diaminocarbonsäuren, Dihydroxysulfonsäuren sowie Diaminoalkylsulfonsäuren und ihre Salze, wie z.B. Dimethylolpropionsäure, Hydroxypivalinsäure, Ethylendiamin-β-ethyl-sulfonsäure, Ethylendiamin-propyl- oder -butylsulfonsäure, 1,2- oder 1,3-Propylendiamin-β-ethylsulfonsäure, Lysin, 3,5-Diaminobenzoesäure und deren Alkali- und/oder Ammoniumsalze; das Addukt von Natriumbisulfit an Buten-2-diol-1,4. Besonders bevorzugte Komponenten 2a) sind die Anlagerungsprodukte von Diaminen, wie beispielsweise Ethylendiamin oder Isophorondiamin an Acrylsäure, wie sie z.B. in der DE-OS 2 034 479 beschrieben sind.

Zu den bevorzugten Einbaukomponenten 2a) für das Einbringen der ionischen Gruppen in die Präpolymerisate A) gehören insbesondere die Sulfonatgruppen aufweisenden aliphatischen Diole gemäß DE-OS 2 446 440 der Formel

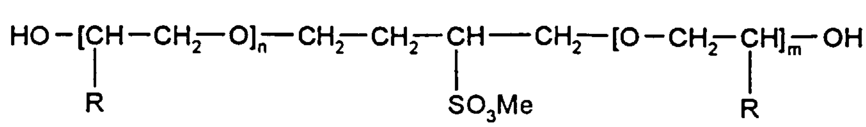

worin

| | |
|---|---|
| R | Wasserstoff oder einen organischen Rest mit 1 bis 8 Kohlenstoffatomen, |
| m und n | Zahlen von 1 bis 10 und |
| Me | Ammonium oder das Kation eines Alkalimetalls bedeuten. |

Beispiele für (potentiell) kationische Aufbaukomponenten 2a) sind tertiäre Aminogruppen aufweisende Diole,

wie z.B. N-Methyl-diethanolamin bzw. deren Protonierungs- oder Alkylierungsprodukte.

Als Reaktionspartner für die Polyisocyanate 1) kommen vor allem Mono- und Polyhydroxylverbindungen in Frage, die pro Molekül 1 bis 8, vorzugsweise 1 bis 3 Hydroxylgruppen aufweisen und ein (mittleres) Molekulargewicht von bis zu 10 000, vorzugsweise bis zu 3 000, aufweisen. Dabei kommen sowohl niedermolekulare Hydroxylverbindungen mit Molekulargewichten von 32 bis 349 als auch höhermolekulare Hydroxylverbindungen mit mittleren Molekulargewichten von mindestens 350, vorzugsweise von mindestens 1000, in Betracht, wie sie in den obengenannten Publikationen ausführlich beschrieben sind.

Höhermolekulare Hydroxylverbindungen umfassen die in der Polyurethanchemie an sich bekannten Hydroxypolyester, Hydroxypolyether, Hydroxypolythioether, Hydroxypolyacetale, Hydroxypolycarbonate und/oder Hydroxypolyesteramide, vorzugsweise solche mit mittleren Molekulargewichten von 600 bis 4000, besonders bevorzugt solche mit mittleren Molekulargewichten von 800 bis 2500. Hydroxypolycarbonate, Hydroxypolyether und Hydroxypolyester sind besonders bevorzugt.

Die Ethylenoxidgruppen liegen vorzugsweise in Blöcken $(-CH_2CH_2O)_n-$ vor, wobei die Sequenzlänge n im allgemeinen 3 bis 50, vorzugsweise 10 bis 45 beträgt.

Für den Aufbau der NCO-Präpolymerisate A)i) geeignete Komponenten 2b) zur Einführung der Ethylenoxideinheiten umfassen Hydroxyhomopolyethylene und Hydroxy-Ethylenoxid-Mischpolyether (vorzugsweise Hydroxy-Ethylenoxid/Propylenoxid-Mischether), vorzugsweise mit Blockverteilung, insbesondere Polyethercarbonate und Polyetherester auf Basis der obengenannten Hydroxyhomopolyethylene, Hydroxy-Ethylenoxid-Mischpolyether oder deren Mischungen mit anderen Polycarbonat- bzw. Polyester-bildenden Hydroxylverbindungen. Sofern als Komponenten 2b) zur Einführung der Ethylenoxideinheiten in das Präpolymerisat A)i) Mischpolyether oder Polyethercarbonate bzw. Polyetherester auf Basis solcher Mischpolyether eingesetzt werden, so zählen vorzugsweise als "Ethylenoxideinheiten" lediglich die Einheiten, die die oben genannte Sequenzlänge aufweisen, während solche Ethylenoxidsequenzen, die eine Sequenzlänge oberhalb oder unterhalb dieser Grenzen besitzen, außer Betracht bleiben.

Die optimale Menge der Ethylenoxid-Einheiten im Präpolymerisat A)i) hängt etwas von der Sequenzlänge ab und folgt der Regel, daß bei kurzer Sequenzlänge die Menge etwas höher sein darf und bei hoher Sequenzlänge die Menge etwas niedriger sein kann: Während bei einer Sequenzlänge von 2 der Gehalt des Präpolymerisats A)i) an diesen Polyethylenoxideinheiten bis zu 50 Gew.-% betragen kann, ist es empfehlenswert, bei einer Sequenzlänge über 20 den Gehalt des Präpolymerisats A)i) an diesen Polyethylenoxideinheiten auf 20 Gew.-% zu begrenzen.

Durch die Wahl von Polyethylenoxid-<u>mono</u>alkoholen einerseits oder Polyethylenoxid<u>poly</u>olen andererseits hat man eine Lenkhilfe für den Grad der erreichbaren Wasserdampfdurchlässigkeit der Beschichtungen in der Hand: Wie beispielsweise in der DE-OS 4 236 569 beschrieben ist, erhält man Polyurethanbeschichtungen mit erhöhter Wasserdampfdurchlässigkeit, wenn in das Polyurethan ionische Gruppen <u>und</u> Polyethylenoxideinheiten bestimmter Sequenzlänge eingebaut werden, die aus eingebauten Polyether<u>poly</u>olen stammen (d.h. also: die in die Hauptkette des Polyurethans eingebaut werden). Dies läßt sich auch auf die NCO-Präpolymerisate A)i) übertragen.

Zur Unterstützung der dispergierenden Wirkung können auch monofunktionelle Polyethylenoxidalkohole (also ethoxylierte einwertige Alkohole oder ethoxylierte Phenole) in das Präpolymerisat A)i) eingebaut werden. Man kann, wenn man solche monofunktionelle Polyethylenoxidalkohole einbaut, auf einen Teil der ionischen Gruppen verzichten. Zur Wasserdampfdurchlässigkeit der Beschichtungen tragen diese monofunktionellen Einheiten jedoch kaum bei.

Ausgangskomponenten 2b) für die Präpolymerisate A)i), die die Polyethylenoxideinheiten liefern, umfassen also vor allem 2 oder 3 Hydroxylgruppen aufweisende Ethylenoxid-Polyether und Ethylenoxid/Propylenoxid-Mischpolyether mit einem überwiegenden Gewichtsanteil an Ethylenoxideinheiten. Reine Ethylenoxid-Polyetheralkohole sind bevorzugt.

Die Verbindungen, die neben den Komponenten eingesetzt werden, welche die anspruchsgemäß definierten Ethylenoxideinheiten liefern, können aus den in der Polyurethanchemie üblichen Verbindungen, die mit Isocyanatgruppen zu reagieren vermögen, ausgewählt werden.

Im folgenden werden Polyhydroxylkomponenten beschrieben, die als Polyurethan-Aufbaukomponenten geeignet sind, aber nicht die anspruchsgemäßen Ethylenoxid-einheiten enthalten.

Die in Frage kommenden Hydroxylgruppen aufweisenden Polycarbonate sind durch Reaktion von Kohlesäurederivaten, z.B. Diphenylcarbonat oder Phosgen, mit Diolen erhältlich. Als derartige Diole kommen z.B. Ethylenglykol, Propandiol-1,2 und -1,3, Butandiol-1,4 und -1,3, Hexandiol-1,6, Octandiol-1,8, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A in Frage. Vorzugsweise enthält die Diolkomponente 40 bis 100 Gew.-% Hexandiol, vorzugsweise Hexandiol-1,6, und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol Caprolacton gemäß DE-AS 17 70 245, oder durch Veretherung von Hexandiol mit sich selbst zum Di-oder Trihexylenglykol erhalten wurden. Die Herstellung solcher Derivate ist z.B. aus der DE-AS 1 570 540 bekannt. Auch die in der DE-OS 37 17 060 beschriebenen Polyether-Polycarbonatdiole können sehr gut eingesetzt werden.

Die Hydroxylpolycarbonate sollen im wesentlichen linear sein. Sie können jedoch gewünschtenfalls durch den Einbau polyfunktioneller Komponenten, insbesondere niedermolekularer Polyole, leicht verzweigt werden. Hierzu eignen sich beispielsweise Glycerin, Trimethylolpropan, Hexantriol-1,2,6, Butantriol-1,2,4, Trimethylolpropan, Pentaerythrit, Chinit, Mannit und Sorbit, Methylglykosid, 1,4,3,6-Dianhydrohexite.

Als Polyetherpolyole geeignet sind die in der Polyurethanchemie an sich bekannten Polyether, wie z.B. die unter Verwendung von zweiwertigen Startermolekülen, wie Wasser, den obengenannten Diolen oder 2 NH-Bindungen aufweisenden Aminen hergestellten Additions- bzw. Mischadditionsverbindungen des Tetrahydrofurans, Styroloxids, Propylenoxids, der Butylenoxide oder des Epichlorhydrins, insbesondere des Propylenoxids.

Als Polyesterpolyole geeignet sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele hierfür seien genannt:
Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terephthalsäuredimethylester, Terephthalsäure-bis-glykolester.

Als mehrwertige Alkohole kommen z.B. Ethylenglykol, Propandiol-(1,2) und -(1,3), Butandiol-(1,4) und -(2,3), Hexandiol-(1,6), Octandiol-(1,8), Neopentylglykol, Cyclohexandimethanol (1,4-Bis-hydroxymethyl-cyclohexan), 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Methylglykosid, ferner Diethylenglykol, Triethylenglykol, Tetraethylenglykol, Dipropylenglykol, Dibutylenglykol und Polybutylenglykole in Frage.

Besonders bevorzugt sind auch Mischungen der obengenannten Polyetherpolyole mit Polycarbonatpolyolen und/oder Polyesterpolyolen mit mittleren Molekulargewichten von 1000 bis 3000 aus Adipinsäure, Hexandiol-1,6 und Neopentylglykol.

Als weitere Aufbaukomponenten zur Herstellung der Präpolymerisate A)i) kommen insbesondere Kettenverlängerer mit Molekulargewichten von 32 bis 299, die 1-4 Hydroxyl- und/oder Aminogruppen aufweisen, in Betracht.

Niedermolekulare Polyhydroxylverbindungen ("Kettenverlängerungsmittel") umfassen die verschiedenartigsten Diole, wie beispielsweise

a) Alkandiole wie Ethylenglykol, Propandiol-1,2 und -1,3, Butandiol-1,4, Pentandiol-1,5, Dimethylpropandiol-1,3 und Hexandiol-1,6;

b) Etherdiole wie Diethylenglykol, Triethylenglykol oder Hydrochinondihydroxyethylether;

c) Esterdiole der allgemeinen Formeln

$$HO\text{-}(CH_2)_x\text{-}CO\text{-}O\text{-}(CH_2)_y\text{-}OH$$

und

$$HO\text{-}(CH_2)_x\text{-}O\text{-}CO\text{-}R\text{-}CO\text{-}O\text{-}(CH_2)_x\text{-}OH$$

in denen

R einen Alkylen- bzw. Arylenrest mit 1 bis 10, vorzugsweise 2 bis 6, C-Atomen,

x = 2 bis 6 und

y = 3 bis 5

bedeuten,
z.B. δ-Hydroxybutyl-ε-hydroxy-capronsäureester, ω-Hydroxyhexyl-γ-hydroxybuttersäureester, Adipinsäure-(β-hydroxyethyl)ester und Terephthalsäure-bis(β-hydroxyethyl)ester.

Jedoch können als Kettenverlängerer auch Polyamine verwendet werden. Hierbei handelt es sich vorzugsweise um aliphatische oder cycloaliphatische Diamine, obwohl gegebenenfalls auch tri- oder höherfunktionelle Polyamine zur Erzielung eines gewissen Verzweigungsgrades mitverwendet werden können. Beispiele geeigneter aliphatischer Polyamine sind Ethylendiamin, Propylendiamin-1,2 und -1,3, Tetramethylendiamin-1,4, Hexamethylendiamin-1,6, das Isomerengemisch von 2,2,4- und 2,4,4-Trimethylhexamethylendiamin, 2-Methyl-pentamethylendiamin und Bis-(β-aminoethyl)-amin (Diethylentriamin).

Beispiele geeigneter cycloaliphatischer Polyamine sind:

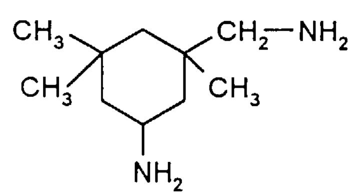

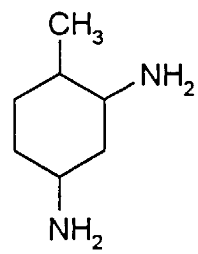

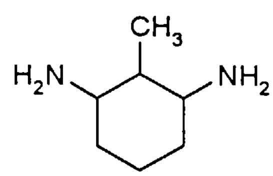

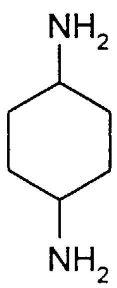

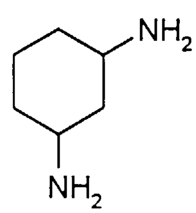

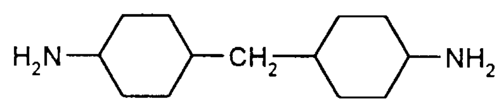

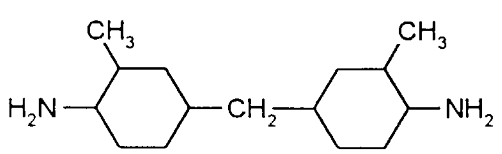

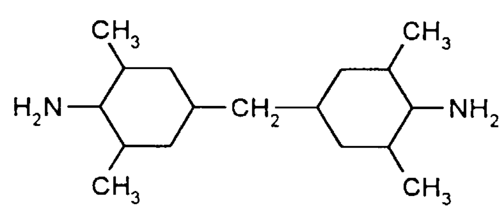

Auch araliphatische Polyamine, wie z.B. 1,3- und 1,4-Xylylendiamin oder α,α,α',α'-Tetramethyl-1,3- und-1,4-xylylendiamin lassen sich als Kettenverlängerungsmittel für die Herstellung der Präpolymerisate A)i) einsetzen.

Als Diamine im Sinne der Erfindung sind auch Hydrazin, Hydrazinhydrat und substituierte Hydrazine zu betrachten, wie z.B.

Methylhydrazin, N,N'-Dimethylhydrazin und deren Homologe sowie Säuredihydrazide, z.B. Carbodihydrazid, Oxalsäuredihydrazid, die Dihydrazide von Malonsäure, Bernsteinsäure, Glutarsäure, Adipinsäure, β-Methyladipinsäure, Sebacinsäure, Hydracrylsäure und Terephthalsäure, Semicarbazido-alkylen-hydrazide, wie z.B. β-Semicarbazidopropionsäurehydrazid (DE-OS 17 70 591), Semicarbazido-alkylencarbazinester, wie z.B. 2-Semicarbazidoethyl-carbazinester (DE-OS 19 18 504) oder auch Amino-semicarbazid-Verbindungen, wie z.B. β-Aminoethyl-semicarbazidocarbonat (DE-OS 19 02 931).

Geeignete Blockierungsmittel 2c) sind insbesondere Verbindungen mit vorzugsweise einer gegenüber Isocyanatgruppen reaktionsfähigen Gruppe, die mit organischen Isocyanaten bei über 50°C, vorzugsweise zwischen 60 und 100°C, eine Additionsreaktion eingehen. Geeignete derartige Blockierungsmittel sind z.B. sekundäre oder tertiäre Alkohole, wie Isopropanol oder tert.-Butanol, C-H-acide Verbindungen, wie z.B. Malonsäuredialkylester, Acetylaceton, Acetessigsäurealkylester, Oxime, wie z.B. Formaldoxim, Acetaldoxim, Methylethylketonoxim, Cyclohexanonoxim, Acetophenonoxim, Benzophenonoxim oder Diethylglyoxim, Lactame, wie z.B. ε-Caprolactam, δ-Valerolactam, γ-Butyrolactam, Phenole, wie Phenol, o-Methylphenol, N-Alkylamide, wie z.B. N-Methyl-acetamid, Imide, wie Phthalimid, sekundäre Amine, wie z.B. Diisopropylamin, Imidazol, Pyrazol und 1,2,4-Triazol. Vorzugsweise werden erfindungsgemäß Methylethylketoxim, ε-Caprolactam und C-H-acide Verbindungen, wie z.B. Malonsäure-$C_1$-$C_4$-alkylester, insbesondere Malonsäurediethylester, Acetessigsäure-$C_1$-$C_4$-alkylester, insbesondere Acetessigsäureethylester, oder Acetylaceton eingesetzt.

Bei der Herstellung der Präpolymerisate A)i) werden die höhermolekularen Polyhydroxylverbindungen 2b) im allgemeinen in einer Menge von 50 bis 70, vorzugsweise von 55 bis 65 Gew.-%, bezogen auf das Gesamtgewicht der Ausgangskomponenten betreffend A)i) eingesetzt. Das Äquivalentverhältnis von Isocyanatgruppen der Komponente 1) zu gegenüber Isocyanatgruppen reaktionsfähigen Gruppen der Komponenten 2) (ohne Einbeziehung der (potentiell) ionischen Gruppen und ohne Blockierungsmittel) liegt im allgemeinen bei 1,5:1 bis 3:1. Die Menge des Blockierungsmittels 2c) wird im allgemeinen so bemessen, daß etwa 50 %, d.h. die Hälfte der nach der Präpolymerisierung vorliegenden NCO-Gruppen damit umgesetzt werden und der verbleibende Rest einer Kettenverlängerung unterworfen wird.

Die Verbindungen A)i) sind wenigstens teilweise z.B. aus WO 93/24 550 bekannt.

Bei der Komponente A)ii) handelt es sich um (cyclo)aliphatische Polyamine mit insgesamt mindestens zwei primären und/oder sekundären Aminogruppen des Molekulargewichtsbereiches 60 bis 400, vorzugsweise 100 bis 250. Beispielhaft genannt seien Ethylendiamin, Hexamethylendiamin, Diethylentriamin, 4,4'-Diaminodicyclohexylmethan, 1,4-Diaminocyclohexan, 3,3,5-Trimethyl-5-aminomethylcyclohexylamin (IPDA) und beliebige Gemische derartiger Polyamine. Bevorzugt sind 4,4'-Diamino-dicyclohexylmethan und 4,4'-Diamino-3,3'-dimethyldicyclohexylmethan. Als vernetzende Polyamine A)ii) eignen sich auch sehr gut die oben als Komponente 2a) genannten Anlagerungsprodukte von Diaminen an Acrylsäure, wie sie aus der DE-OS 2 034 479 bekannt sind.

Die Polyamine A)ii) werden bei der Herstellung der erfindungsgemäß zu verwendenden wäßrigen Dispersionen in solchen Mengen eingesetzt, daß das Molverhältnis von blockierten Isocyanatgruppen der Komponente A)i) zu primären und/oder sekundären Aminogruppen der Komponente A)ii) bei 1:0,9 bis 1:1,2, vorzugsweise 1:1 bis 1:1,1 liegt.

Die wäßrige Phase B) besteht zum größten Teil aus Wasser, kann aber auch organische Hilfslösungsmittel enthalten. Bevorzugte organische Hilfslösungsmittel umfassen beispielsweise Amide wie N,N-Dimethylformamid, N, N-Dimethylacetamid, N-Methylpyrrolidon, Ketone wie Methylethylketon, Diacetonalkohol, Cyclohexanon, Ether wie Ethylenglykolmonomethyl-, -ethyl- und -butylether und die entsprechenden Ether des Diethylenglykols, Propylenglykolmonomethyl- und -butylether, Ester wie Propylenglykoldiacetat und Dipropylenglykol-methyletheracetat. Die Menge der organischen Hilfslösungsmittel beträgt vorzugsweise bis zu 20, insbesondere bis zu 10 Gew.-%, bezogen auf wäßrige Phase B. Besonders bevorzugte erfindungsgemäß zu verwendende Dispersionen sind frei von organischen Hilfslösungsmitteln.

Der Gehalt an wäßriger Phase der erfindungsgemäß zu verwendenden Dispersionen kann 10 bis 70, vorzugsweise 25 bis 60 Gew.-%, bezogen auf fertige Dispersion betragen.

Das nach der Herstellung als Schmelze oder als Lösung vorliegende Präpolymerisat A)i) kann dann durch Vermischen mit Wasser und gegebenenfalls anschließendem Abdestillieren des Hilfslösungsmittels in eine wäßrige Dispersion überführt werden.

Grundsätzlich können die Präpolymerisate A)i) nach beliebigen Verfahren in wäßrige Dispersionen überführt werden. Zu erwähnen wären hier als Beispiele die Dispergierung ohne Verwendung von Lösern, z.B. durch Vermischung der Präpolymerisatschmelze mit Wasser in Geräten, die hohe Schergefälle erzeugen können, sowie die Verwendung von sehr geringen Mengen organischer Lösungsmittel zur Plastifizierung bei der Verarbeitung in den gleichen Geräten, weiterhin die Zuhilfenahme nicht mechanischer Dispergiermittel, wie Schallwellen extrem hoher Frequenz. Es können jedoch auch einfache Mischer, z.B. Rührkessel oder sogenannte Durchlaufmischer Verwendung finden, da die Präpolymerisate A)i) selbstdispergierbar sind. Bevorzugt ist das sogenannte "Aceton-Verfahren".

Die Herstellung der erfindungsgemäß zu verwendenden wäßrigen Dispersionen kann beispielsweise so erfolgen, daß man die Ausgangspolyisocyanate 1) im Sinne einer Eintopfreaktion mit NCO-reaktiven Verbindungen einschließlich der Komponenten 2a) und gegebenenfalls 2b) bei 60 bis 110°C zur Reaktion bringt, bis der berechnete NCO-Wert des Reaktionsgemisches, im allgemeinen ein Wert zwischen 2,5 und 4,5 Gew.-% erreicht ist. Danach wird mit einem gegenüber Isocyanatgruppen inerten und mit Wasser mischbaren Lösemittel, z.B. Aceton, verdünnt. In dieser verdünnten Lösung des NCO-Präpolymerisates wird ein Teil der NCO-Gruppen, z.B. die Hälfte, mit einem Blockierungsmittel 2c) bei ca. 60°C umgesetzt. Der restliche Teil der NCO-Gruppen wird mit einem Kettenverlängerer, der gleichzeitig eine ionische Gruppe enthalten kann, abreagiert. Wenn diese Reaktionsmischung keine freien NCO-Gruppen mehr aufweist, wird Komponente A)ii) hinzugemischt. Anschließend wird mit Wasser dispergiert. Nach dem destillativen Entfernen des Lösemittels erhält man die erfindungsgemäß zu verwendenden Dispersionen.

Den erfindungsgemäß zu verwendenden Dispersionen können die üblichen Hilfs- und Zusatzmittel der Leder- und Textilbeschichtungstechnologie, wie beispielsweise Pigmente, Verlaufmittel, UV-Stabilisatoren, Antioxidantien, Füllstoffe oder Thixotropiermittel zugemischt werden. Es entstehen gebrauchsfertige wäßrige Beschichtungsmittel, die

bei Raumtemperatur praktisch unbegrenzt lagerfähig sind und bei relativ niedrigen Temperaturen von 120 bis 150°C innerhalb von 2 bis 3 Minuten zu Beschichtungen mit sehr guten Trockenhaftfestigkeiten und insbesondere mit sehr guten Naß-Haftfestigkeiten aushärten.

Die erfindungsgemäß zu verwendenden Dispersionen werden besonders bevorzugt zur Herstellung von Haftstrichen eingesetzt. Hier können sie ihre Wirkung durch den 2-stufigen Aushärtungsprozeß voll entfalten. Nach der ersten physikalischen Trocknung bei ca. 100°C verbleibt ein klebriger, den Deckstrich gut benetzender Film. Nach Kontakt mit dem Substrat und kurzzeitiger Erwärmung auf 130 bis 150°C tritt die chemische Vernetzung, also Deblokkierung der blockierten NCO-Gruppen und die Reaktion der Komponente A)ii) ein. Auf diese Weise entsteht ein Verbund, wie er mit wäßrigen Bindemitteln gemäß dem Stand der Technik bisher nicht möglich war.

Zur Modifizierung bestimmter Eigenschaften der erfindungsgemäß herstellbaren Beschichtungen, wie Griff, Oberflächenglätte, können oligomere Polysiloxan-Segmente enthaltende Verbindungen mit mindestens zwei gegenüber Isocyanaten reaktionsfähigen Gruppen mit Molekulargewichten von 300 bis 6000, vorzugsweise von 500 bis 1500, eingesetzt werden. Bevorzugt werden difunktionelle Polysiloxane mit organofunktionellen Endgruppen eingesetzt. Diese Verbindungen weisen Struktureinheiten der Formel $-O-Si(R)_2-$ auf, wobei R für einen $C_1$-$C_4$-Alkyl- oder einen Phenylrest, vorzugsweise für einen Methylrest steht.

Die erfindungsgemäß zu verwendenden wäßrigen Dispersionen sind stabil, lager-, und versandfähig und können zu beliebig späterem Zeitpunkt verarbeitet werden. Je nach der gewählten chemischen Zusammensetzung und dem Gehalt an Urethangruppen erhält man Beschichtungen mit unterschiedlichen Eigenschaften. So können weiche klebrige Schichten, thermoplastische und gummielastische Produkte der verschiedensten Härtegrade, aber auch weiche Deckstriche (vergl. Beispiel 2), erhalten werden.

Die erfindungsgemäß zu verwendenden Dispersionen sind zur Beschichtung bzw. zum Überziehen und zum Imprägnieren von gewebten und nichtgewebten Textilien und von Leder geeignet.

Die erfindungsgemäß zu verwendenden Dispersionen werden in der Regel ohne weitere Zusätze auf das Substrat aufgebracht. Dies kann durch direktes Streichen auf das Substrat mit Hilfe von Rakelmessern, Walzen oder Drahtrakeln erfolgen.

In der Regel werden mehrere Striche hintereinander, bevorzugt jedoch zwei, aufgebracht, so daß die Gesamtdicke der Beschichtung aus Grund- und Deckstrich(en) 10 bis 100 µm, bevorzugt 20 bis 60 µm, beträgt. Als Grundstrich kann auch eine zu einer mikroporösen Schicht auftrocknende Paste verwendet werden, wie es in DE-OS 2 020 153 beschrieben ist. Der anschließend aufgebrachte Deckstrich schützt den gesamten Verbund gegen mechanische Beanspruchung und Abrieb.

Das Aufbringen des Beschichtungsverbundes aus Grund- und Deckstrich ist aber auch nach dem sogenannten Umkehrverfahren möglich. Hierbei wird zunächst der Deckstrich auf einen Trennträger aufgetragen und getrocknet. Nach dem Auftragen eines zweiten Grund- oder Haftstriches wird das Substrat in die noch feuchte Schicht leicht eingedrückt. Nach dem Trocknen entsteht ein fester Verbund aus Beschichtung und Substrat, der vom Trennträger gelöst wird und in seinem Aufbau weitgehend dem der vorher beschriebenen Direktbeschichtung entspricht.

Einen besonderen Vorteil bietet die Erfindung, wenn die erfindungsgemäß zu verwendenden Dispersionen für den Haftstrich und als Substrat ein PU-Koagulatbeschichtetes Textil oder Leder eingesetzt werden.

Die Prozentangaben der nachfolgenden Beispiele beziehen sich jeweils auf das Gewicht.

## Beispiele

### Beispiel 1

Wäßrige Bindemittel-Dispersion für einen Haftanstrich

| Ansatz: | | |
|---|---|---|
| 500,0 g | (0,5 Val) | eines Polypropylenglykols mit der OH-Zahl 56 |
| 500,0 g | (0,5 Val) | eines Polyetherpolyols der OH-Zahl 56, hergestellt durch Propoxylierung von Trimethylolpropan |
| 500,0 g | (0,5 Val) | eines Polycarbonates der OH-Zahl 56, basierend auf 1,6-Dihydroxyhexan |
| 247,5 g | (0,11 Val) | eines einwertigen Polyetherpolyols der OH-Zahl 25 ("Dispergator"), hergestellt durch Ethoxylierung von n-Butanol |
| 382,5 g | (3,06 Val) | 4,4'-Diisocyanatodiphenylmethan (MDI) |
| 60,9 g | (0,7 Val) | Butanonoxim |
| 134,7 g | (0,7 Val) | Kettenverlängerer (40%ige wäßrige Lösung eines Addukts aus 1 Mol Acrylsäure und 1 Mol Ethylendiamin, neutralisiert mit 1 Mol NaOH) |

(fortgesetzt)

| Ansatz: | | |
|---|---|---|
| 73,5 g | (0,7 Val) | 4,4'-Diamino-dicyclohexylmethan |
| 2550,0g | | Wasser |
| 4949,1 g | | Dispersion |
| 2318,3 g | | berechneter Festkörperanteil |
| | | Der Gehalt dieses NCO-Präpolymerisates an |
| | | - blockierten NCO-Gruppen beträgt 1,25 %, |
| | | - Polyethylenoxid-Einheiten beträgt ca. 10,0 %, |
| | | - Carboxylat-Gruppen beträgt 15 Milliäquivalente pro 100 g. |

Durchführung:

Die Gesamtmenge an MDI wird vorgelegt, die wasserfreien Polyole und der "Dispergator" werden unter Rühren hinzugegeben. Die Reaktionsmischung wird auf 80°C erwärmt. Nach ca. 5 Stunden Umsetzungsdauer bei 80°C wird ein NCO-Gehalt von 2,7 % gemessen (berechnet 2,8 %). Man läßt auf ca. 60°C abkühlen, verdünnt mit 2500 g Aceton und rührt die Butanonoxim-Menge ein. Nach 30-minütiger Umsetzung bei ca. 55°C beträgt der NCO-Gehalt der Lösung 0,63 % (berechnet 0,67 %). Hierzu wird jetzt die Kettenverlängerer-Lösung, verdünnt mit ca. 500 g Wasser, tropfenweise hinzugegeben. Man erhält eine trübe acetonische Lösung, in der nach 20-minütiger Nachrührzeit bei ca. 40°C kein NCO-Gehalt mehr nachweisbar (IR-Spektrum) ist. Man rührt den Diamin-Vernetzer ein und dispergiert innerhalb von 15 Minuten mit dem verbleibenden Wasseranteil. Nach dem Abdestillieren des Acetons (40 bis 50°C, 250 bis 10 mbar, ca. 3 Stunden) erhält man eine milchig blaue Dispersion mit einer Viskosität bei 23°C von ca. 500 mPas. Der berechnete Festkörpergehalt beträgt 47 %.

Eigenschaften:

100 g der obigen Dispersion werden mit 0,3 g ®Walucel MT 6000 PV (Verdicker auf Cellulosebasis) in eine streichfähige thixotrope Beschichtungsmasse für einen Klebstrich verwandelt.

Auf Trennpapier wird zuerst die Deckstrichpaste (lösemittelhaltig) und danach die erfindungsgemäße Klebstrichmasse (Trockenauflage ca. 15 g pro $m^2$) aufgerakelt und bei 100°C vorgetrocknet. Danach wird das Substrat, ein PU-Koagulat-beschichtetes Textil, bei Raumtemperatur daraufgelegt und angedrückt. Der Beschichtungsaufbau wird jetzt ohne Druck bei ca. 160°C (Substrat-Temperatur) in 2 Minuten ausgehärtet. Derartige beschichtete Koagulat-Kunstleder erfüllen den Bally-Flexometertest ohne Beschädigung (150.000 Knickungen trocken, 100.000 naß).

## Beispiel 2

Wäßrige Bindemittel-Dispersion für einen Deckstrich

| Ansatz: | | |
|---|---|---|
| 150,0 g | (0,15 Val) | eines Polycarbonates der OH-Zahl 56, basierend auf 1,6-Dihydroxyhexan |
| 60,0 g | (0,06 Val) | eines Polypropylenglykols der OH-Zahl 56 |
| 70,0 g | (0,07 Val) | eines Polyetherpolyols der OH-Zahl 56, hergestellt durch Propoxylierung von Trimethylolpropan |
| 49,5 g | (0,022 Val) | eines einwertigen Polyetherpolyols der OH-Zahl 25 ("Dispergator"), hergestellt durch Ethoxylierung von n-Butanol |
| 84,4 g | (0,644 Val) | 4,4'-Diisocyanato-dicyclohexylmethan |
| 14,1 g | (0,14 Val) | Diisopropylamin |
| 30,7 g | (0,16 Val) | Kettenverlängerer aus Beispiel 1 |
| 16,6 g | (0,14 Val) | 4,4'-Diamino-3,3'-dimethyl-dicyclohexylamin |
| 710,0 g | | Wasser |
| 1185,3 g | | Dispersion |

(fortgesetzt)

| Ansatz: | | |
|---|---|---|
| 456,88 g | | berechneter Festkörperanteil Der Gehalt dieses NCO-Präpolymerisates an - blockierten NCO-Gruppen beträgt 1,33 %, - Polyethylenoxid-Einheiten beträgt ca. 11,2 %, - Carboxylat-Gruppen beträgt 16,8 Milliäquivalente pro 100 g. |

Durchführung:

Die wasserfreien Polyole sowie der "Dispergator" und das Diisocyanat werden in einer Eintopfreaktion bei 100°C in ca. 4,5 Stunden bis zu einem NCO-Gehalt von 3,0 % (berechnet sind 3,1 %) umgesetzt. Anschließend wird mit 500 g Aceton verdünnt. Bei 40°C wird die acetonische Lösung des NCO-Präpolymers mit Diisopropylamin blockiert (15 Minuten), anschließend wird Dimethylolpropionsäure, verdünnt mit ca. 50 g Wasser, eingetropft. Wenn die Kontrollmessung nach einer Umsetzung von ca. 30 Minuten bei 35 bis 40°C keinen NCO-Gehalt mehr anzeigt (IR-Spektrum), wird der Diamin-Vernetzer eingerührt. Danach wird mit der restlichen Wassermenge dispergiert. Nach dem Abdestillieren des Acetons (ca. 3 Stunden, 250 → 10 mbar, 40 bis 50°C) erhält man eine Dispersion mit einer Viskosität bei 23°C von ca. 2300 mPas. Der berechnete Festkörpergehalt beträgt 40 %.

Eigenschaften:

Von obiger Dispersion wird ein Film hergestellt (Aushärtung 2 Minuten 150°C), Flächengewicht 91 g/$m^2$. Folgende mechanische Eigenschaften werden gemessen:
Modul 100 % = 3,3 MPa

| | Zugfestigkeit/Dehnung (DIN 53504) |
|---|---|
| trocken | 24,6 MPa / 690 % |
| naß (24 h Wasserlagerung) | 16,9 MPa / 820 % |

Dies sind außerordentlich gute Werte für einen weichen Deckstrich.

**Beispiel 3**

Wäßrige Beschichtungsmittel-Dispersion für einen wasserdampfdurchlässigen Haftstrich

| Ansatz: | | |
|---|---|---|
| 100,0 g | (0,1 Val) | eines Polyetherpolyols der OH-Zahl 56, hergestellt durch Propoxylierung (50 %) und Ethoxylierung (50 %) von Propylenglykol |
| 100,0 g | (0,1 Val) | eines Polyetherpolyols der OH-Zahl 56, hergestellt durch Propoxylierung von Trimethylolpropan |
| 100,0 g | (0,1 Val) | eines Polycarbonates der OH-Zahl 56, basierend auf 1,6-Dihydroxyhexan |
| 49,5 g | (0,022 Val) | eines einwertigen Polyetherpolyols der OH-Zahl 25 ("Dispergator"), hergestellt durch Ethoxylierung von n-Butanol |
| 76,5 g | (0,612 Val) | 4,4'-Diisocyanatodiphenylmethan |
| 12,1 g | (0,14 Val) | Butanonoxim |
| 26,8 g | (0,14 Val) | Kettenverlängerer aus Beispiel 1 |
| 35,0 g | (0,14 Val) | des Additionsproduktes von 1 Mol 3,3'-Dimethyl-4,4'-diamino-dicyclohexylmethan und 0,4 Mol Acrylsäure, neutralisiert mit 0,4 Mol NaOH, gelöst zu 56,56 % in Isopropanol/Wasser. Das $NH/NH_2$-Äquivalent dieser Lösung beträgt 250 g |
| 825,0 g | (35%ig) | Wasser |
| 1324,9 g | | Dispersion |
| 468,6 g | | berechneter Festkörperanteil |

Der Gehalt dieses NCO-Präpolymerisates an

- blockierten NCO-Gruppen beträgt 1,3 %,
- Polyethylenoxid-Einheiten beträgt ca. 22,1 %,
- Carboxylat-Gruppen beträgt 15 Milliäquivalente pro 100 g.

Das für die Vernetzung von Komponente A)i) dienende Diamin A)ii) besitzt in obigem Falle selbst Carboxylat-Gruppen, um die Wasserdampf-Durchlässigkeit der resultierenden Beschichtung zu erhöhen.

Durchführung:

Die wasserfreien Polyole inklusive des "Dispergators" werden zusammen mit MDI 5 Stunden bei 80°C umgesetzt, bis ein NCO-Gehalt von 2,7 % (berechnet sind 2,8 %) erreicht ist. Danach wird mit 500 g Aceton verdünnt und 30 Minuten bei 30°C mit Butanonoxim umgesetzt und ein NCO-Gehalt von 0,61 % gemessen (berechnet sind 0,67 %). Anschließend wird der Kettenverlängerer, verdünnt mit 50 ml Wasser hinzugetropft. Nach einer Umsetzungsdauer von 30 Minuten bei ca. 30°C enthält die acetonische Lösung keine NCO-Gruppen mehr. Man rührt den Diamin-Vernetzer ein, dispergiert mit Waser, zieht das Aceton unter vermindertem Druck bei 40 bis 50°C ab und erhält eine milchig trübe Dispersion mit einer Viskosität bei 23°C von ca. 1600 mPas. Der berechnete Festkörpergehalt beträgt 35 %.

Eigenschaften:

100 g der Dispersion werden mit 3 g Polyacrylsäure-Verdicker zu einer streichfähigen Paste verdickt. Auf Trennpapier wird ein Film durch Trocknung bei 50 bis 80°C und anschließender Kondensierung bei 150°C (5 Minuten) hergestellt; Flächengewicht: 95 g/$m^2$.
Folgende mechanische Eigenschaften wurden gemessen:
Modul 100 % = 1,2 MPa

| | Zugfestigkeit/Dehnung |
|---|---|
| trocken | 9,7 MPa/ 610 % |
| naß (24 Stunden Wasserlagerung) | 4,9 MPa / 550 % |
| Hydrolyse 14d/70°C/95 % r. Lf. | 9,0 MPa / 580 % |

Ein Film mit einer Filmstärke von 45 g/$m^2$ besitzt eine Wasserdampfdurchlässigkeit von 20.800 g/$m^2$. (Die Wasserdampfdurchlässigkeit wird gemessen nach den Maßgaben, wie sie in der Druckschrift DS 2109 TM1 der British Textile Technology Group, Manchester, England niedergelegt sind.)

## Patentansprüche

**1.** Verwendung wäßriger Dispersionen enthaltend

A)

(i) Urethangruppen aufweisendes blockiertes NCO-Präpolymerisat mit

- einem als Zahlenmittel bestimmten Molekulargewicht von 2000 bis 10000,
- einem Gehalt blockierter Isocyanatgruppen (berechnet als NCO) von 0,5 bis 5 Gew.-%, bezogen auf das Präpolymerisat A)i),
- einem Gehalt an Ethoxygruppen $-CH_2CH_2O-$ von 2 bis 50 Gew.-%, bezogen auf das Präpolymerisat A)i), mit einer sequenzlängen von 3 bis 50,
- einem Gehalt ionischer Gruppen von 5 bis 30 meq (Milliäquivalenten) pro 100 g des Präpolymerisates A)i) (fest),

(ii) Polyamin mit (cyclo)aliphatisch gebundenen primären und/ oder sekundären Aminogruppen,

wobei das Äquivalentverhältnis blockierter NCO-Gruppen aus (i) zu Aminogruppen aus (ii) 1:0,9 bis 1:1,2 beträgt, und

B) wäßrige Phase
zur Textil- und Lederbeschichtung.

**2.** Verwendung nach Anspruch 1, wonach das NCO-Präpolymerisat ein als Zahlenmittel bestimmtes Molekulargewicht von 3500 bis 7000 besitzt.

**3.** Verwendung nach Anspruch 1, wonach das NCO-Präpolymerisat einen Gehalt an Ethoxygruppen von 5 bis 25 Gew.-% besitzt.

**4.** Verwendung nach Anspruch 1, wonach das NCO-Präpolymerisat einen Gehalt ionischer Gruppen von 10 bis 20 meq pro 100 g Präpolymerisat besitzt.

**5.** Verwendung nach Anspruch 1, wonach die Beschichtung nach dem Umkehrverfahren erfolgt.

## Claims

**1.** Use of aqueous dispersions containing

A)

(i) blocked NCO prepolymer containing urethane groups with

- a molecular weight determined as a number average of 2000 to 10000,
- a content in blocked isocyanate groups (calculated as NCO) of 0.5 to 5 wt %, referred to the prepolymer A)i),
- a content in ethoxy groups $-CH_2CH_2O-$ of 2 to 50 wt %, referred to the prepolymer A)i), with a sequence length n of 3 to 50,
- a content in ionic groups of 5 to 30 meq (milli equivalents) per 100 g of the prepolymer A) i) (solid) ,

(ii) polyamine with (cyclo)aliphatically bonded primary and/or secondary amino groups,

where the equivalent ratio of blocked NCO groups of (i) to amino groups of (ii) comes to 1 : 0.9 to 1 : 1.2, and
B) aqueous phase
for the coating of textiles and leather.

**2.** Use according to claim 1, according to which the NCO prepolymer possesses a molecular weight determined as a number average of 3500 to 7000.

**3.** Use according to claim 1, according to which the NCO prepolymer possesses a content in ethoxy groups of 5 to 25 wt %.

**4.** Use according to claim 1, according to which the NCO prepolymer possesses a content in ionic groups of 10 to 20 meq per 100 g of prepolymer.

**5.** Use according to claim 1, according to which the coating takes place by the reverse method.

## Revendications

1. Utilisation de dispersions aqueuses contenant

   A)

   (i) un prépolymère bloqué contenant des groupes NCO et présentant des groupes uréthanne avec

   - un poids moléculaire déterminé comme moyenne en nombre de 2000 à 10000,
   - une teneur en groupes isocyanate bloqués (calculés comme groupes NCO) de 0,5 à 5 % en poids rapportés au prépolymère A)i),
   - une teneur en groupes éthoxy $-CH_2CH_2O-$ de 2 à 50 % en poids rapportés au prépolymère A)i), avec une longueur de séquence n de 3 à 50,
   - une teneur en groupes ioniques de 5 à 30 méq (milliéquivalents) par 100 g du prépolymère A)i) (à l'état solide),

   (ii) une polyamine contenant des groupes amino primaires ou secondaires liés à des radicaux (cyclo) aliphatiques,

   le rapport d'équivalents des groupes NCO bloqués de (i) aux groupes amino de (ii) s'élevant de 1:0,9 à 1:1,2, et

   B) une phase aqueuse
   pour l'enduction des textiles et du cuir.

2. Utilisation selon la revendication 1, par laquelle le prépolymère contenant des groupes NCO possède un poids moléculaire moyen déterminé comme moyenne en nombre de 3500 à 7000.

3. Utilisation selon la revendication 1, par laquelle le prépolymère contenant des groupes NCO possède une teneur en groupes éthoxy de 5 à 25 % en poids.

4. Utilisation selon la revendication 1, par laquelle le prépolymère contenant des groupes NCO possède une teneur en groupes ioniques de 10 à 20 méq. par 100 g de prépolymère.

5. Utilisation selon la revendication 1, par laquelle l'enduction a lieu conformément au procédé par inversion.